(19) Europäisches Patentamt

European Patent Office

Office européen des brevets

(11) **EP 1 215 468 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
***G01C 21/34*** *(2006.01)*

(21) Anmeldenummer: **01129527.6**

(22) Anmeldetag: **11.12.2001**

(54) **Verfahren zur Repräsentation eines örtlichen und zeitlichen Ablaufs der Bewegung eines Objekts oder Subjekts**

Method for representing a spatial and temporal sequence of movements of an object or subject

Procédé de représentation d'une séquence spatiale et temporelle de mouvements d'un objet ou d'un sujet

(84) Benannte Vertragsstaaten:
**AT BE CH CY DE DK ES FI FR GB GR IE IT LI LU MC NL PT SE TR**

(30) Priorität: **12.12.2000 DE 10061865**

(43) Veröffentlichungstag der Anmeldung:
**19.06.2002 Patentblatt 2002/25**

(73) Patentinhaber: **Deutsches Zentrum für Luft- und Raumfahrt**
**51147 Köln (DE)**

(72) Erfinder:
• **Angermann, Michael, Dipl.-Ing.**
**82166 Gräfelfing (DE)**

• **Steingass, Alexander, Dipl.-Ing.**
**82205 Gilching (DE)**
• **Robertson, Patrick, Dr.**
**82541 Ammerland (DE)**

(74) Vertreter: **von Kirschbaum, Albrecht Patentanwalt,**
**Postfach 15 20**
**82102 Germering (DE)**

(56) Entgegenhaltungen:
**EP-A- 0 953 825**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur planartigen Repräsentation eines örtlichen und zeitlichen Ablaufs der Bewegung eines Objekts oder Subjekts auf einer Darstellungseinrichtung in einem automatisierten System, auf welcher der Bewegungsablauf in Gestalt eines Graphen dargestellt wird, der aus über Knoten verknüpften Zweigen gebildet wird, wobei jedem Knoten ein Ort mit jeweils einer Information und einer Angabe zum vorgesehenen Anwesenheitszeitpunkt des Objekts bzw. Subjekts am betreffenden Ort und jedem Zweig ein Übergang mit einer den jeweiligen Übergang betreffenden Information zugeordnet wird.

Zur Behandlung örtlicher und zeitlicher Abläufe, wie sie beispielsweise bei einer Reise einer Person vorliegen, in einem automatisierten System ist es erforderlich, diese Abläufe zu repräsentieren. Zugfahrpläne werden auf verhältnismäßig einfache Weise repräsentiert, schon lange bevor Computer eingeführt wurden. Nachfolgend ist für eine gängige Repräsentationsform eines Zugfahrplans ein Beispiel angegeben.

ICE 592

| Ort | an | ab |
|---|---|---|
| München Hbf | 14:07 | 14:09 |
| Augsburg Hbf | 14:49 | 14:51 |
| Stuttgart Hbf | 15:47 | 15.51 |
| Mannheim Hbf | 16:27 | 16:35 |
| Frankfurt (Main) Hbf | 17:10 | |

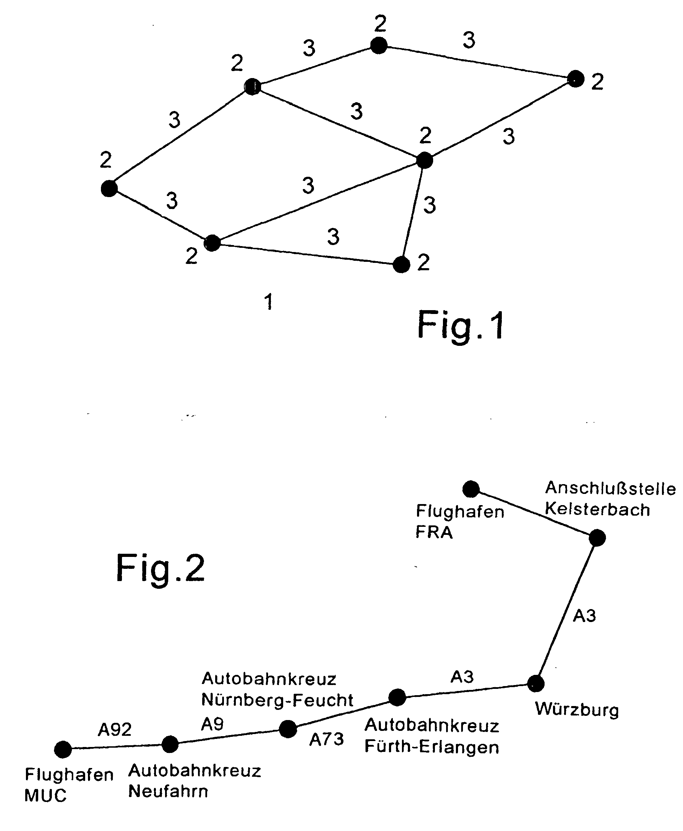

Soll beispielsweise für die Fahrt mit einem Automobil von München nach Frankfurt eine Route repräsentiert werden, so stehen viele alternative Teilstücke zur Auswahl. Im Prinzip kann an jeder Straßenabzweigung oder -kreuzung ein alternativer Weg eingeschlagen werden. Um aus der Vielzahl der möglichen Wege einen solchen auszusuchen, der bestimmte Kriterien, wie z.B. minimale Fahrstrecke, erfüllt, hat sich die Darstellung als Graph und die Verwendung der bekannten, an diese Repräsentation angepaßten Algorithmen zur Routenplanung bewährt. In Fig.1 ist eine solche Repräsentationsform mit Graphen 1 dargestellt, wobei unter einem Graphen 1 eine Menge von miteinander verknüpften Zweigen 3 verstanden wird, deren Verknüpfungspunkte als Knoten 2 bezeichnet werden.

In diesem Zusammenhang ist es bekannt, für die Planung von Fahrstrecken den Teilstücken dieser Fahrstrecke jeweils einen Zweig 3 und den Kreuzungs- oder Abzweigungspunkten einen Knoten 2 zuzuordnen. Fig.2 zeigt dazu in einem Beispiel die Fahrstrecke vom Flughafen München zum Flughafen Frankfurt über die Autobahn.

Aus EP 0 953 825 A2 ist eine Routensucheinrichtung bekannt, mit deren Hilfe beispielsweise von einem Autofahrer eine empfehlenswerte Route zu einem Ziel gesucht werden kann. Sie umfaßt Mittel zur Kartendatenspeicherung, Mittel zum Empfang von Meldungen örtlicher und zeitlicher Verkehrsstaus und Reisezeitberechnungsmittel. Der örtliche und zeitliche Bewegungsablauf der geplanten Reise wird dabei auf einer Darstellungseinrichtung in Gestalt eines Graphen abgebildet.

Ein solcher Graph wird aus über Knoten verknüpften Liniensegmenten gebildet, wobei jedem Knoten ein Ort mit jeweils einer Information und einer Angabe zum vorgesehenen Anwesenheitszeitpunkt des Objekts bzw. Subjekts am betreffenden Ort und jedem Liniensegment ein Übergang mit einer den jeweiligen Übergang betreffenden Information zugeordnet wird.

Eine ähnliche Einrichtung ist auch aus WO 00/02010 AI bekannt. Allerdings ist an den Knoten des Graphen kein Ort mit jeweils einer Information und einer Angabe zum vorgesehenen Anwesenheitszeitpunkt angegeben. Vielmehr werden an den hier als Kanten bezeichneten Zweigen des Graphen Zeitangaben angezeigt, welche der Dauer für das Zurücklegen des betreffenden Weges entsprechen. Es werden also hier nicht die Knoten des Graphen verwendet, um eine geplante Reise in ihrem Ablauf darzustellen.

Die bekannten Repräsentationsverfahren mit Graphen stellen wie die Darstellungsverfahren, die entsprechend den herkömmlichen Zugfahrplänen arbeiten, den weitgehend planmäßigen Ablauf der Fahrt eines Objekts oder Subjekts auf einer Darstellungseinrichtung dar. Es können noch gemeldete oder geschätzte Stauzeiten dazukommen, wobei dann eine neue Routenzeit errechnet wird.

Tatsächlich sind allerdings die Ankunfts- und Abfahrtszeiten immer noch mit einer gewissen Unsicherheit behaftet. Diese Unsicherheiten werden jedoch bei den bekannten Reise-Repräsentationsverfahren für den Reisenden nicht in ausreichender und fundierter Weise dargeboten und ausgewertet.

Der Erfindung liegt die Aufgabe zu Grunde, ein Verfahren zur planartigen Repräsentation eines örtlichen und zeitlichen Ablaufs der Bewegung eines Objekts oder Subjekts auf einer Darstellungseinrichtung zu schaffen, das übersichtlicher als das herkömmliche Darstellungsverfahren nach Art von Zugfahrplänen ist, eine schnelle und sichere Einschätzung des zu erwartenden Bewegungsverlaufs des Objekts bzw. Subjekts ermöglicht und dabei im Reiseablauf auch die Unsicherheiten berücksichtigt, die durch die Abweichungen von geplanten Ankunfts- und Abfahrtszeiten entstehen können.

Diese Aufgabe wird gemäß der Erfindung, die sich auf ein Verfahren der eingangs genannten Art bezieht, dadurch gelöst, dass den bei den Knoten, die auch an den offenen Enden der Zweige vorgesehen werden, und/oder Zweigen der Darstellungseinrichtung angegebenen Informationen zur Repräsentation und Verwendung noch eine zusätzliche Information beigeordnet wird, welche die Unsicherheit der die Knoten und/oder Zweige betreffenden Informationen enthält, und dass die beigeordnete, repräsentierte und verwendete, zusätzliche Information Daten einer beschreibenden Wahrscheinlichkeitsverteilung hat, die so gewählt wird, dass für den jeweils zugeordneten Ort oder Übergang die reale Verteilung approximierbar ist.

Es wird hierbei davon ausgegangen, dass jedem Knoten eine Information über einen Ort in Raum und Zeit beigeordnet und den Zweigen eine Information bezüglich des Übergangs jeweils zwischen denjenigen zwei Orten beigefügt ist, die den Knoten an den Enden des betreffenden Zweiges entsprechen. Unter einem Ort in Raum und Zeit wird hierbei ein bestimmter Zeitpunkt an einem bestimmten Ort bzw. äquivalent hierzu ein bestimmter Ort zu einem bestimmten Zeitpunkt verstanden. Beispiele hierfür sind:

München Karlsplatz um 13:40 Uhr
Raum-Nr. 204 um 11:00 Uhr am 21.11.2000
N 48°05.213', E 11°11.676' um 22:00:00
Gate B12 Warte-Lounge um 08:00 Uhr

Mit Hilfe des entsprechend der Erfindung arbeitenden Repräsentationsverfahrens kann in zweckmäßiger Weise aus mehreren knoten- und zweigmäßig aufeinanderfolgenden Wahrscheinlichkeitsdichteverteilungen eine Aussage über die Zuverlässigkeit des Graphen oder eines Abschnitts eines Graphen getroffen und somit eine Bewertung der Sicherheit des durch den Graphen repräsentierten Weges vorgenommen werden.

Dazu lassen sich bekannte Verfahren aus der Mathematik und der Kommunikationstechnik verwenden, welche die Information über die Unsicherheit in eine Planung des Ablaufs der Bewegung mit einbeziehen können. Es läßt sich beispielsweise der Viterbi-Algorithmus verwenden.

Es können zwei oder mehr Graphen bzw. Abschnitte eines Graphen, die wegmäßig unterschiedlich sind, aber zum gleichen Ziel führen, im Hinblick auf die jeweilige Zuverlässigkeitsaussage und Sicherheitsbewertung miteinander verglichen werden, so daß aufgrund dieses Graphen- bzw. Graphenabschnittsvergleichs derjenige Weg ausgewählt werden kann, für den sich die größte Zuverlässigkeit und Sicherheit ergeben hat.

Bisher verwendete Sicherheitszeitabstände zwischen zwei Orten, die in der Darstellungseinrichtung durch zwei aufeinanderfolgende Knoten repräsentiert werden, können gemäß einer vorteilhaften Weiterbildung des Verfahrens nach der Erfindung aufgrund der dort angegebenen Unsicherheitsinformationen optimiert werden.

Zur Repräsentierung der Unsicherheit können so bezeichnete flexible Navigationsobjekte verwendet werden.

Eine Weiterbildung der Erfindung besteht darin, daß ein Aufenthalt oder eine Pause des Objekts bzw. Subjekts an einem Ort auf der Darstellungseinrichtung als Zweig (Wartezweig) repräsentiert wird, wobei den beiden Knoten an dessen beiden Enden der jeweils gleiche Ort zugeordnet wird.

Zur detaillierteren Repräsentation wird in vorteilhafter Weise ein Zweig und hierbei vor allem ein solcher Zweig (Wartezweig), der einen Aufenthalt oder eine Pause des Objekts bzw. Subjekts an einem Ort repräsentiert, auf der Darstellungseinrichtung durch einen weiteren Graphen ersetzt oder ergänzt, der seinerseits wiederum aus Zweigen und Knoten besteht. Beim detaillierter darzustellenden Zweig oder an den beiden Knoten an den Enden dieses Zweiges wird dann zweckmäßig eine auf den weiteren Graphen verweisende Information, beispielsweise in Gestalt von Pfeilen, dargestellt.

Vorteilhafte Anwendungsmöglichkeiten des Verfahrens nach der Erfindung bestehen insbesondere bei einem System zur Planung und/oder Organisation des Ablaufs der Bewegung eines Objekts oder Subjekts oder auch bei Zeitorganisationssystemen für Personen, die auch eine Reiseplanung und Reisedurchführung betreffen können.

Das Verfahren nach der Erfindung wird nachfolgend anhand der anliegenden Zeichnungen erläutert. Es zeigen:

Fig.1 das bereits vorher beschriebene Beispiel eines aus einer Menge von Knoten und Zweigen bestehenden Graphen,

Fig.2 das ebenfalls bereits vorher beschriebene Beispiel einer durch einen Graphen repräsentierten Straßenverbindung zwischen dem Flughafen München und dem Flughafen Frankfurt,

Fig.3 ein Beispiel für zwei gemäß dem Verfahren nach der Erfindung durch einen Graphen repräsentierte Verbindungen zwischen dem Flughafen München und dem Flughafen Frankfurt, und zwar zum einen über die Straße und zum anderen über den Luftweg,

Fig.4          die gleiche Repräsentation wie in Fig.3, jedoch unter zeichnerischer Hervorhebung von Zweigen (Wartezweigen), die einen Aufenthalt oder eine Pause darstellen,

Fig. 5         einen Wartezweig aus Fig.4, der durch einen weiteren Graphen detaillierter dargestellt wird,

Fig.6          ein Beispiel für mehrere gemäß dem Verfahren nach der Erfindung durch einen Graphen repräsentierte Eisenbahn-Verbindungsmöglichkeiten für eine Reise zwischen dem Hauptbahnhof München und dem Hauptbahnhof Rostock,

Fig.7 (a) und (b)   zwei verschiedene Wahrscheinlichkeitsverteilungen für einen Knoten und/oder Zweig als Information der Unsicherheit von Knoten und/oder Zweige betreffenden Informationen, und

Fig.8          drei Wahrscheinlichkeitsdichteverteilungen zur Information der Unsicherheit bzw. Zuverlässigkeit eines geplanten Weges.

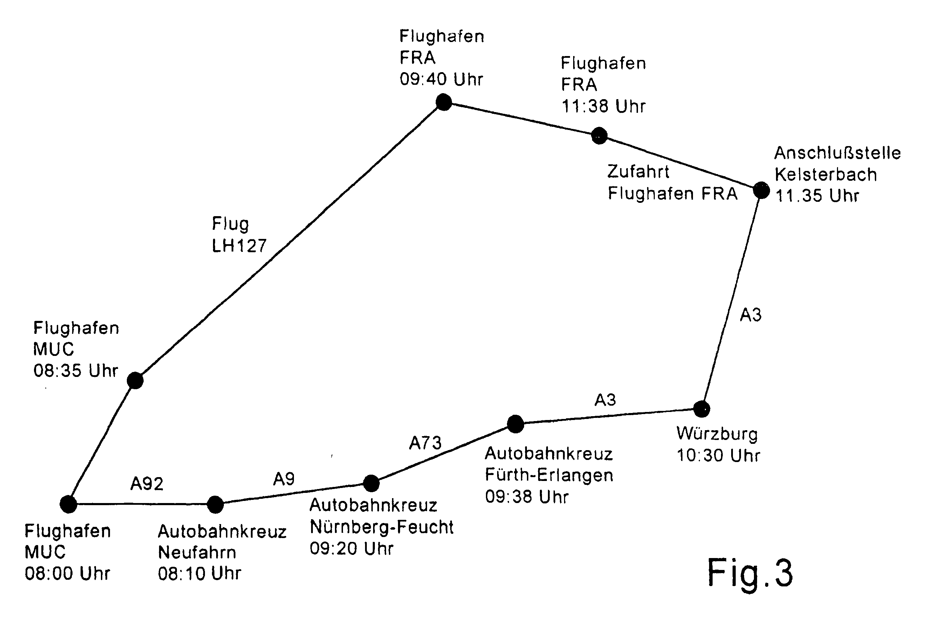

Fig.3 zeigt ein Beispiel für eine entsprechend dem erfindungsgemäßen Verfahren durchgeführte planartige Repräsentation eines örtlichen und zeitlichen Ablaufs der Bewegung eines Objekts oder Subjekts auf einer Darstellungseinrichtung. Es sollen geplante Verbindungen zwischen dem Flughafen München und dem Flughafen Frankfurt zum einen mit dem Automobil über die Autobahn und zum anderen mit dem Flugzeug repräsentiert werden.

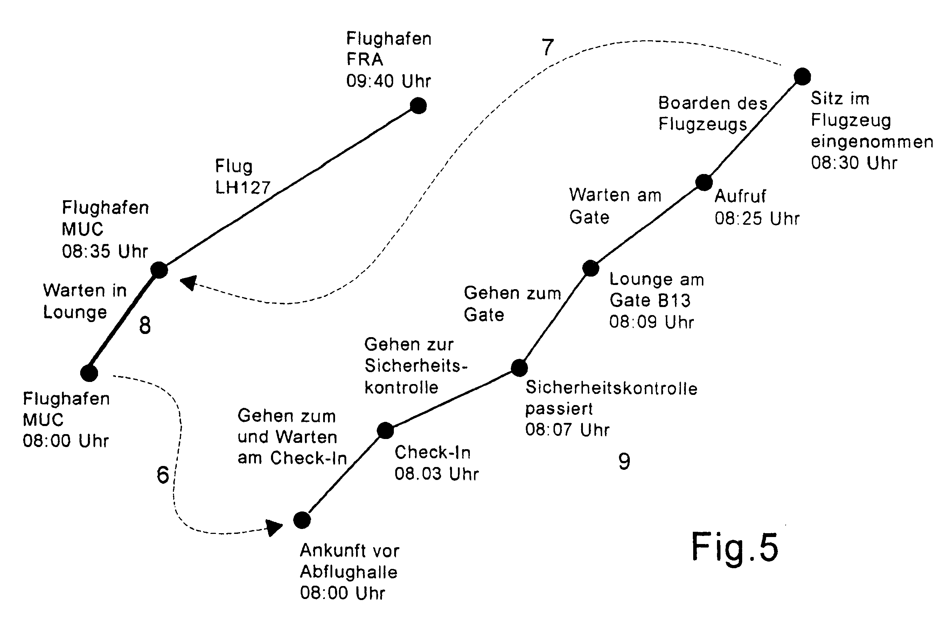

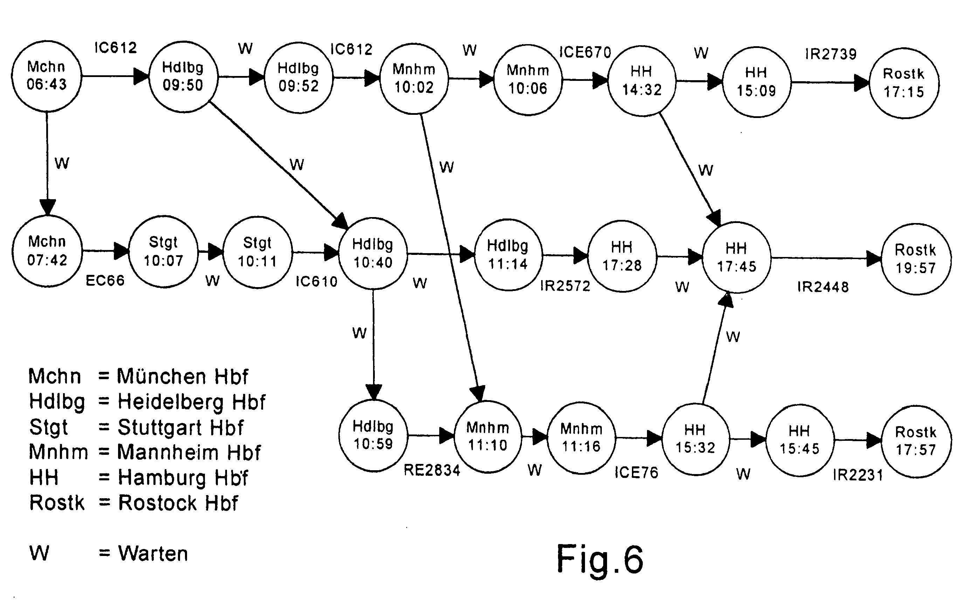

Der Ablauf wird in Gestalt eines Graphen dargestellt, der aus einer Menge von miteinander an Knoten verknüpften Zweigen gebildet wird. Prinzipiell weisen die Zweige auch an ihren offenen Enden einen Knoten auf, was in Fig.3 wegen der Zweigegeschlossenheit zwar nicht erkennbar ist, jedoch in Fig.5 im später noch näher beschriebenen, detaillierter dargestellten Zweig und auch in Fig.6 im Beispiel eines Zugreiseplans zwischen München Hbf und Rostock Hbf.

Jedem Knoten des Graphen wird ein Ort zugeordnet, über den auf der Darstellungseinrichtung beim entsprechenden Knoten zusammen mit dem vorgesehenen Anwesenheitszeitpunkt des Objekts bzw. Subjekts am betreffenden Ort eine Information angegeben wird, z.B. "Autobahndreieck Nürnberg-Feucht, 09:20 Uhr" oder "Flughafen FRA, 09:40 Uhr".

Jedem Zweig wird ein Übergang zwischen denjenigen Orten zugeordnet, die den beiden Knoten an den beiden Enden des jeweiligen Zweiges entsprechen. Auf der Darstellungseinrichtung wird bei den Zweigen eine den jeweiligen Übergang betreffende Information angegeben, z.B. "A73" oder "Flug LH127". Es können an den Zweigen insbesondere Informationen über die Art des Reisemittels oder die Kosten des Teilstücks angegeben werden.

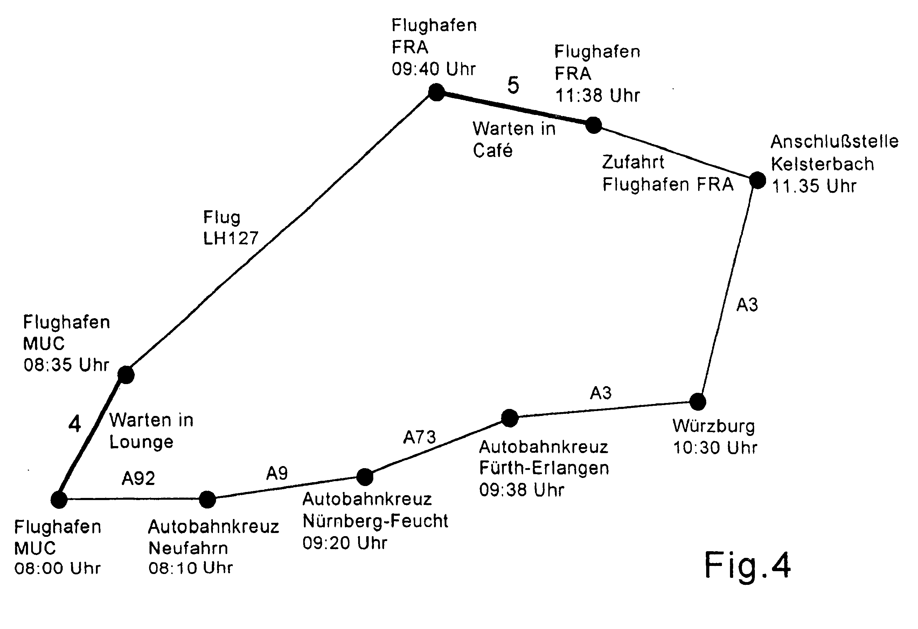

Eine Besonderheit beim Verfahren nach der Erfindung stellt der Umstand dar, daß ein Warten oder Verweilen, ein Aufenthalt oder eine Pause an einem Ort ebenfalls als Zweig zwischen zwei Knoten repräsentiert werden kann. Ein solcher Zweig (Wartezweig) stellt eine "Reise" zwischen zwei übereinstimmenden Orten in Raum und Zeit dar. In der Repräsentation von Fig.4, die hinsichtlich des Graphenverlaufs und der Informationsangaben mit Fig.3 übereinstimmt, sind derartige Wartezweige 4 und 5 durch Linienverstärkung hervorgehoben.

Soll ein Teilabschnitt im Verlauf der Planung bzw. Durchführung detaillierter repräsentiert werden, so kann wie im Beispiel der Fig.5 der bestehende Zweig 8, der im Beispiel der Wartezweig "Warten in Lounge" ist, durch einen weiteren, ebenfalls aus Zweigen und Knoten bestehenden Graphen 9 ersetzt werden. Die Zweige und Knoten des weiteren Graphen 9 enthalten ebenfalls Informationen wie z.B. "Gehen zur Sicherheitskontrolle" bzw. "Check-In, 08:03 Uhr".

Insbesondere ist es auch möglich, daß an den beiden Knoten, die ein Zweig verbindet, z.B. in Form eines Pfeiles 6 eine auf einen detaillierteren Zweig verweisende Information und ein Pfeil 7 zurück vorhanden sind. Auf diese Weise kann der Vorgang in der jeweils angepaßten Detaillierungsstufe bearbeitet werden.

Fig.6 zeigt noch ein Beispiel für mehrere gemäß dem Verfahren nach der Erfindung durch einen Graphen repräsentierte Eisenbahn-Verbindungsmöglichkeiten für eine Reise zwischen dem Hauptbahnhof München und dem Hauptbahnhof Rostock.

Es handelt sich hierbei um eine planartige Repräsentation des örtlichen und zeitlichen Ablaufs der Bewegung von für einen Reisenden in Betracht kommenden Zügen auf einer Darstellungseinrichtung. Es sollen geplante Zugverbindungen zwischen dem Hauptbahnhof München und dem Hauptbahnhof Rostock repräsentiert werden. Der Ablauf wird in Gestalt eines Graphen dargestellt, der aus einer Menge von miteinander an Knoten verknüpften Zweigen gebildet wird.

Die Knoten sind in Fig.6 als Kreise dargestellt, wobei jeweils in einem Kreis ein Ort und die geplante Anwesenheitszeit eines für die Reise in Betracht kommenden Zuges angegeben sind, z.B. Heidelberg Hbf, 09:50 Uhr oder Mannheim Hbf, 10:02 Uhr. Die Zweige weisen auch an ihren offenen Enden einen Knoten auf, z.B. Rostock Hbf, 17:15 Uhr.

Jedem Zweig wird ein Übergang zwischen denjenigen Orten zugeordnet, die den beiden Knoten an den beiden Enden des jeweiligen Zweiges entsprechen. Auf der Darstellungseinrichtung wird bei den Zweigen, die keine Wartezweige W sind, eine den jeweiligen Zug betreffende Information angegeben, z.B. "IC612" oder "EC66". Es können an den Zweigen auch noch andere Informationen, z.B. über die Kosten des betreffenden Teilstücks, angezeigt werden.

Ein Aufenthalt oder eine Pause an einem Ort, z.B. in Heidelberg Hbf zwischen 09:50 Uhr und 09:52 Uhr im IC612, wird im Beispiel von Fig.6 ebenfalls als Zweig, nämlich als Wartezweig W zwischen zwei Knoten repräsentiert.

Ein solcher Wartezweig W stellt eine "Reise" zwischen zwei gleichen Orten in Raum und Zeit dar. Auch ein Umsteigen von einem Zug zu einem anderen am gleichen Bahnhof durch die reisende Person wird durch einen Wartezweig W repräsentiert, z.B. durch den Wartezweig W zwischen Heidelberg Hbf, 09.50 Uhr (IC612) und Heidelberg Hbf, 10:40 Uhr (IR2572). Mit Hilfe des Repräsentationsverfahrens nach der Erfindung kann sich also ein Reisender ein klares Bild eines Reiseplans für die Durchführung einer Reise von München Hbf nach Rostock Hbf machen, wobei mehrere Varianten enthalten und miteinander vergleichbar sind.

Ein Plan wie z.B. der in der Beschreibungseinleitung angegebene Zugfahrplan des ICE 592 repräsentiert im Sinne des Wortes den planmäßigen Ablauf der Fahrt. Tatsächlich sind die An- und Abfahrtszeiten jedoch mit einer gewissen Unsicherheit behaftet. Diese Unsicherheit kann allerdings in der herkömmlichen Fahrplanform nicht repräsentiert werden. Das Verfahren nach der Erfindung ermöglicht dagegen eine Repräsentation und Verwendung einer Information, die diese Unsicherheit beschreibt. Zu diesem Zweck wird einem Knoten und/oder Zweig eine Wahrscheinlichkeitsverteilung beigeordnet. Dabei kann es sich um verschiedene Arten von Wahrscheinlichkeitsverteilungen handeln.

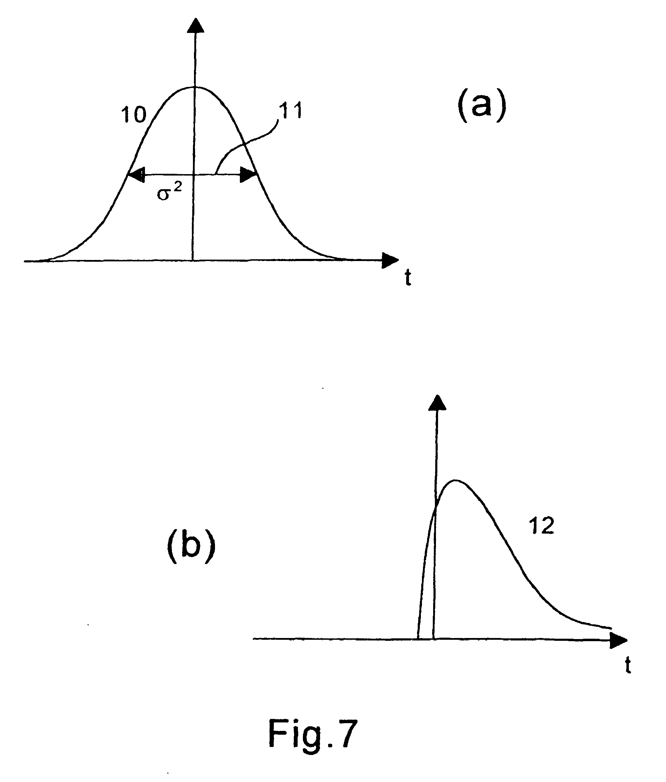

Wie Fig.7 in (a) zeigt, ist für die Ankunftszeit eines Fahrzeugs oder eines Fußgängers an einem bestimmten Ort unter anderen eine Normalverteilung 10 eine die Realität gut abbildende Beschreibung. Da diese Verteilung durch einen einzigen Parameter, nämlich die mit 11 bezeichnete Varianz $\sigma^2$, vollständig beschrieben ist, kann die zusätzliche Information sehr effizient gespeichert werden. Eine derartige symmetrische Wahrscheinlichkeitsverteilung ist bei der Abfahrtszeit eines Zuges oder der Abflugzeit eines Flugzeugs dagegen nicht anzunehmen.

Bei beiden Verkehrsmitteln besteht eine äußerst geringe Wahrscheinlichkeit, daß sie vor dem planmäßigen Zeitpunkt starten. Die diesbezügliche Wahrscheinlichkeit kann durch eine nichtsymmetrische Verteilung 12 beschrieben werden, wie sie in Fig.7 in (b) dargestellt ist. Auch eine derartige Verteilung kann durch wenige Parameter, z.B. mittels Splines (Spline: segmentierte Kurve, die aus Polynomen zusammengesetzt wird), anderen Funktionen oder zusammengesetzten Funktionen beschrieben werden und die reale Verteilung in guter Näherung approximieren.

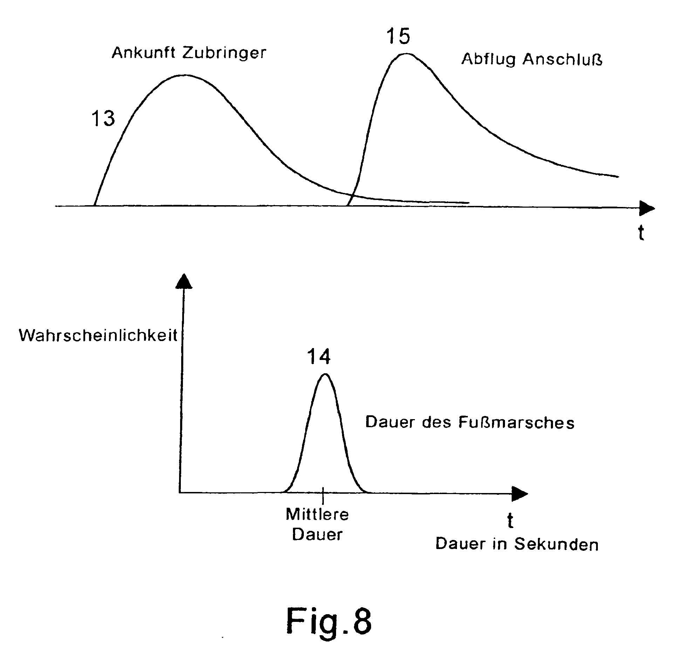

Da derartige Informationen über die Unsicherheit bisher nicht verwendet werden, läßt sich auch nicht bewerten, wie wahrscheinlich der planmäßige Ablauf einer Reise tatsächlich eintritt. Als Beispiel wäre der anhand von Fig.8 erläuterte Fall zu nennen, wie hoch die Wahrscheinlichkeit ist, daß von einer Person ein Anschlußflug noch erreicht wird. Hierbei erlaubt die Verwendung der Wahrscheinlichkeitsdichteverteilung (WDV) 13 des Ankunftszeitpunktes des Zubringerfluges, der Wahrscheinlichkeitsdichteverteilung (WDV) 14 des Fußmarsches zum neuen Gate und der Wahrscheinlichkeitsdichteverteilung (WDV) 15 des Abflugzeitpunktes des Anschlußfluges eine Aussage über die Zuverlässigkeit der geplanten Route.

Das Verfahren nach der Erfindung erlaubt somit mit dieser Weiterbildung die Bewertung und den Vergleich verschiedener möglicher Routen und damit eine Auswahl der am besten geeigneten Route. Darüber hinaus können bisher verwendete Sicherheitsabstände zwischen Teilabschnitten der Reisestrecke optimiert werden.

Zur Erklärung des oberen Teiles der Fig.8 mit den Wahrscheinlichkeitsdichteverteilung (WDV) 13 und 15 ist folgende Formel zweckmäßig:

$$P = \int\limits_{-\infty}^{+\infty}\left(\left(\int\limits_{t_x=-\infty}^{t_x=t_A} WDF_{AnkunftZubringer}(t_x)dt_x\right) \cdot \int\limits_{t_y=t_A}^{t_y=+\infty} WDF_{AbflugAnschluß}(t_y)dt_y\right) \cdot dt_A$$

Hierin ist $t_A$ die Laufvariable der tatsächlichen Zeit der Ankunft des Zubringers. P ist die Wahrscheinlichkeit, daß der Reisende bei Wahl der Kombination aus Zubringer und Anschluß das Ziel erreicht, d.h. den Anschluß nicht verpaßt.

Praktisch realisieren lassen sich sowohl das analytische Lösen der vorstehenden Formel als auch die (teil-)numerische Auswertung, d.h. ein oder mehrere Integrale werden durch Summen ersetzt und/oder die Wahrscheinlichkeitsdichtefunktionen *WDF* werden durch Tabellen ersetzt.

Die Wahrscheinlichkeit P wird verwendet, um die Güte der speziellen Kombination Zubringer/Anschluß quantitativ zu bewerten und mit anderen Kombinationen zu vergleichen.

Bei einem komplexen Graphen treten diese Berechnungen an jedem Knotenpunkt auf.

Das Anschlußverkehrsmittel hat wiederum neben der Wahrscheinlichkeitsdichtefunktion *WDF* des Zeitpunktes des Abfluges eine Wahrscheinlichkeitsdichtefunktion *WDF* seiner Ankunft. Bei vielen Verkehrsmitteln ist jedoch die letztgenannte Wahrscheinlichkeitsdichtefunktion *WDF* der Ankunft eine Funktion des tatsächlichen Zeitpunktes des Abflugs, also eine bedingte Wahrscheinlichkeitsdichtefunktion *WDF*.

Durch eine an dieser Stelle nicht näher ausgeführte, geeignete mathematische Verknüpfung zwischen den Wahrscheinlichkeitsdichtefunktionen *WDF* für AnkunftZubringer, AbflugAnschluß und der bedingten Wahrscheinlichkeitsdichtefunktion *WDF* von AnkunftAnschluß läßt sich die Wahrscheinlichkeitsdichtefunktion *WDF* der Ankunft des Anschlusses berechnen.

In der praktischen Realisierung wird es häufig notwendig sein, die bedingte Wahrscheinlichkeitsdichtefunktion *WDF* von AnkunftAnschluß durch eine nicht bedingte Wahrscheinlichkeitsdichtefunktion *WDF* zu approximieren. In diesem Fall läßt sich das vorherige Ergebnis mit dieser approximierten Wahrscheinlichkeitsdichtefunktion *WDF* multiplizieren, um eine *WDF*-ähnliche Funktion $f_2$ zu berechnen. Die Funktion $f_2$ wird formal zu einer Wahrscheinlichkeitsdichtefunktion *WDF,* indem man z.B. beim Zeitpunkt "unendlich" einen Diracstoß (Fläche = 1) addiert und diesen mit (1-P) multipliziert.

Auf diese Weise wird repräsentiert, daß die Reise an dieser Stelle mit einer Wahrscheinlichkeit (1-P) nicht zum Erfolg führt, da der Anschluß verpaßt wurde. Diese Wahrscheinlichkeitsdichtefunktion *WDF* kann im nächsten Schritt auf die vorstehend angegebene Weise weiterverwendet werden, um die Güte des nächsten Übergangs zu berechnen.

Bei komplexen Reisenetzwerken bestehen mehrere Pfade vom Anfangs- bis zum Endknoten. Das vorstehend beschriebene Verfahren läßt sich auf jeden dieser Pfade anwenden. Die Ergebnisse $P_i$ der unterschiedlichen Pfade $i$ können dann am Endknoten bewertet werden. So kann beispielsweise der Pfad mit dem größten $P_i$ gewählt werden und es lassen sich die Buchungen für die betreffenden Abschnitte auslösen.

An dieser Stelle ist noch anzumerken, daß Abflug und Ankunft in diesem Beispiel nur stellvertretend für Beginn und Ende eines Reiseabschnittes stehen und keine Einschränkung auf fliegende Verkehrsmittel darstellen.

In analoger Weise können die Wahrscheinlichkeiten angegeben werden, daß von einer reisenden Person ein Anschlußzug beim Umsteigen von einem Zug zu einem anderen in einem Bahnhof noch erreicht werden kann, z.B. in einem Umsteigebahnhof im Reiseplanungsbeispiel von Fig.6.

Es kann im Beispiel von Fig.6 für jede mögliche und für den Reisenden in Betracht kommende Zugverbindung von München Hbf nach Rostock Hbf eine Aussage über die Zuverlässigkeit erreicht werden. Das Verfahren nach der Erfindung ermöglicht damit die Bewertung und den Vergleich der verschiedenen in Betracht kommenden Eisenbahnverbindungen zwischen München Hauptbahnhof und Rostock Hauptbahnhof und auf diese Weise eine Auswahl der für den Reisenden am besten geeigneten Verbindung.

Bezugszeichenliste

1  Graph
2  Knoten
3  Zweig
4  Wartezweig
5  Wartezweig
6  Pfeil
7  Pfeil
8  Zweig
9  Graph
10  Normalverteilung
11  Varianz
12  Nichtsymmetrische Verteilung
13  Wahrscheinlichkeitsdichteverteilung (WDV)
14  Wahrscheinlichkeitsdichteverteilung (WDV)
15  Wahrscheinlichkeitsdichteverteilung (WDV)
W  Wartezweig

**Patentansprüche**

1. Verfahren zur planartigen Repräsentation eines örtlichen und zeitlichen Ablaufs der Bewegung eines Objekts oder Subjekts auf einer Darstellungseinrichtung in einem automatisierten System, auf welcher der Bewegungsablauf in Gestalt eines Graphen dargestellt wird, der aus über Knoten verknüpften Zweigen gebildet wird, wobei jedem Knoten ein Ort mit jeweils einer Information und einer Angabe zum vorgesehenen Anwesenheitszeitpunkt des Objekts bzw. Subjekts am betreffenden Ort und jedem Zweig ein Übergang mit einer den jeweiligen Übergang betreffenden Information zugeordnet wird, **dadurch gekennzeichnet, dass** den bei den Knoten, die auch an den offenen Enden der Zweige vorgesehen werden, und/oder Zweigen der Darstellungseinrichtung angegebenen Informationen zur Repräsentation und Verwendung noch eine zusätzliche Information beigeordnet wird, welche die Unsicherheit der die Knoten und/oder Zweige betreffenden Informationen enthält, und dass die beigeordnete, repräsentierte und verwendete, zusätzliche Information Daten einer beschreibenden Wahrscheinlichkeitsverteilung hat, die so gewählt wird, dass für den jeweils zugeordneten Ort oder Übergang die reale Verteilung approximierbar ist.

2. Verfahren nach Anspruch 1, **dadurch gekennzeichnet, dass** ein Aufenthalt oder eine Pause des Objekts bzw. Subjekts an einem Ort auf der Darstellungseinrichtung als Zweig (Wartezweig) repräsentiert wird, wobei den beiden Knoten an dessen beiden Enden der jeweils gleiche Ort zugeordnet wird.

3. Verfahren nach Anspruch 1 oder 2, **dadurch gekennzeichnet, dass** zur detaillierteren Repräsentation ein Zweig und hierbei vor allem ein solcher Zweig (Wartezweig), der einen Aufenthalt oder eine Pause des Objekts bzw. Subjekts an einem Ort repräsentiert, auf der Darstellungseinrichtung durch einen weiteren Graphen ersetzt wird, der seinerseits wiederum aus Zweigen und Knoten besteht.

4. Verfahren nach Anspruch 3, **dadurch gekennzeichnet, daß** beim detaillierter darzustellenden Zweig oder an den beiden Knoten an den Enden dieses Zweiges eine auf den weiteren Graphen verweisende Information, beispielsweise in Gestalt von Pfeilen, dargestellt wird.

5. Verfahren nach einem der vorhergehenden Ansprüche, **gekennzeichnet durch** die Verwendung bekannter Verfahren aus der Mathematik und der Kommunikationstechnik, welche die Information über die Unsicherheit in eine Planung des Ablaufs der Bewegung mit einbeziehen.

6. Verfahren nach Anspruch 5, **gekennzeichnet durch** die Verwendung des Viterbi-Algorithmus.

7. Verfahren nach Anspruch 1, **dadurch gekennzeichnet, daß** zur Repräsentierung der Unsicherheit flexible Navigationsobjekte verwendet werden.

8. Verfahren nach Anspruch 1, **dadurch gekennzeichnet, daß** aus mehreren knoten- und zweigmäßig aufeinanderfolgenden Wahrscheinlichkeitsdichteverteilungen eine Aussage über die Zuverlässigkeit des Graphen oder eines Abschnitts eines Graphen getroffen und somit eine Bewertung der Sicherheit des durch den Graphen repräsentierten Weges vorgenommen wird.

9. Verfahren nach Anspruch 8, **dadurch gekennzeichnet, daß** zwei oder mehr Graphen bzw. Abschnitte eines Graphen, die wegmäßig unterschiedlich sind, aber zum gleichen Ziel führen, im Hinblick auf die jeweilige Zuverlässigkeitsaussage und Sicherheitsbewertung miteinander verglichen werden und daß aufgrund dieses Graphen- bzw. Graphenabschnittsvergleichs derjenige Weg ausgewählt wird, für den sich die größte Zuverlässigkeit und Sicherheit ergeben hat.

10. Verfahren nach einem der vorhergehenden Ansprüche, **dadurch gekennzeichnet, daß** bisher verwendete Sicherheitszeitabstände zwischen zwei Orten, die in der Darstellungseinrichtung durch zwei aufeinanderfolgende Knoten repräsentiert werden, aufgrund der dort angegebenen Unsicherheitsinformationen optimiert werden.

11. Anwendung des Verfahrens nach einem der vorhergehenden Ansprüche bei einem System zur Planung und/oder Organisation des Ablaufs der Bewegung eines Objekts oder Subjekts.

12. Anwendung nach Anspruch 11, **dadurch gekennzeichnet, daß** das System ein Zeitorganisationssystem für Personen ist, das auch eine Reiseplanung und Reisedurchführung betreffen kann.

**Revendications**

1. Procédé de représentation planaire du parcours spatial et temporel du déplacement d'un objet ou d'un sujet sur un dispositif de représentation dans un système automatisé, sur lequel le parcours du déplacement est représenté sous forme d'un graphe, qui est composé de branches reliées par des noeuds, sachant qu'à chaque noeud est associé un lieu comprenant respectivement une information et une indication du moment où la présence de l'objet et/ou du sujet prévue au lieu en question et qu'à chaque branche est associée une jonction comprenant une information concernant la jonction respective, **caractérisé en ce qu'**aux informations de représentation et d'utilisation indiquées dans les noeuds, qui sont également prévus sur les extrémités ouvertes des branches, et/ou les branches du dispositif de représentation, est encore associée une information additionnelle, laquelle contient l'incertitude des informations concernant les noeuds et/ou les branches, et **en ce que** l'information additionnelle coordonnée, représentée et utilisée possède les données d'une distribution de probabilité descriptive, qui est sélectionnée de sorte que la distribution réelle peut être approximée pour le lieu ou la jonction respectivement associé(e).

**2.** Procédé selon la revendication 1, **caractérisé en ce qu'**un séjour ou une pause de l'objet et/ou du sujet en un lieu est représenté(e) sur le dispositif de représentation par une branche (branche d'attente), chaque même lieu étant associé aux deux noeuds sur ses deux extrémités.

**3.** Procédé selon la revendication 1 ou 2, **caractérisé en ce que**, pour une représentation détaillée, une branche et dans ce cas notamment une branche (branche d'attente) telle que celle qui représente un séjour ou une pause de l'objet et/ou du sujet en un lieu, est remplacée sur le dispositif de représentation par un autre graphe, qui est pour sa part à nouveau constitué de branches et de noeuds.

**4.** Procédé selon la revendication 3, **caractérisé en ce que**, près de la branche détaillée destinée à être représentée ou sur les deux noeuds aux extrémités de cette branche, une information renvoyant aux autres graphes est représentée, par exemple sous forme de flèches.

**5.** Procédé selon l'une quelconque des revendications précédentes, **caractérisé par** l'utilisation de procédés connus issus des mathématiques et des techniques de communication, lesquels font entrer l'information concernant l'incertitude dans une planification du parcours du déplacement.

**6.** Procédé selon la revendication 5, **caractérisé par** l'utilisation de l'algorithme Viterbi.

**7.** Procédé selon la revendication 1, **caractérisé en ce que**, pour représenter l'incertitude, on utilise des objets de navigation flexibles.

**8.** Procédé selon la revendication 1, **caractérisé en ce qu'**à partir de plusieurs distributions de densité de probabilité successives en fonction des noeuds et des branches, une déclaration de fiabilité du graphe ou d'une partie d'un graphe est faite et ainsi une évaluation de la certitude du trajet représenté par le graphe est réalisée.

**9.** Procédé selon la revendication 8, **caractérisé en ce que** deux graphes ou plus et/ou parties d'un graphe, qui sont très différents, mais mènent au même objectif, sont comparés l'un à l'autre en ce qui concerne chaque déclaration de fiabilité et évaluation de la certitude et **en ce qu'**en raison de cette comparaison des graphes et/ou des parties de graphe, on sélectionne le trajet pour lequel on a obtenu le plus grand niveau de fiabilité et de certitude.

**10.** Procédé selon l'une quelconque des revendications précédentes, **caractérisé en ce que** des intervalles de temps de certitude jusqu'à présent utilisés entre deux lieux, qui sont représentés dans le dispositif de représentation par deux noeuds successifs, sont optimisés en raison des informations d'incertitude indiquées à cet endroit.

**11.** Application du procédé selon l'une quelconque des revendications précédentes, dans le cas d'un système de planification et/ou d'organisation du parcours du déplacement d'un objet ou sujet.

**12.** Application du procédé selon la revendication 11, **caractérisé en ce que** le système est un système d'organisation du temps pour des personnes, qui peut concerner également la préparation d'un voyage et l'accomplissement d'un voyage.

**Claims**

**1.** A method for plan-type representation of the motion sequence in time and space of an object or subject on a display means in an automated system displaying the motion sequence by way of a graph formed by branches linked by nodes, each node being assigned a location including an information and an indication as to the presence of the object or subject respectively as provided for by the point in time at the location concerned and each branch being assigned a transition with an information relating to the transition in each case, **characterized in that** the information as to representation and use indicated at the nodes which are also provided at the open ends of the branches, and/or branches of the display means is assigned an additional information containing the uncertainty of the information relating to the nodes and/or branches and that said assigned represented and used additional information includes data of a descriptive probability distribution selected so that the real distribution for each assigned location or transition is approximatable.

2. The method as set forth in claim 1, **characterized in that** a stop or break of the object or subject at a location on the display means is represented as a branch (waiting branch), the two nodes each being assigned the same location at their two ends

3. The method as set forth in claim 1 or 2,
**characterized in that** for a more detailed representation a branch and especially one such branch (waiting branch) representing a stop or break of the object or subject at a location is replaced on the display means by a further graph which in turn is made up of branches and nodes.

4. The method as set forth in claim 3, **characterized in that** an information pointing to further graphs, for example in the form of arrows, is displayed for the branch to be displayed in more detail or at the two nodes at the end of this branch.

5. The method as set forth in any of the preceding claims, **characterized by** use of methods known from mathematics and communications engineering which permit taking into account the information as to the uncertainties in planning the sequence of the motion.

6. The method as set forth in claim 5, **characterized by** use of the Viterbi algorithm.

7. The method as set forth in claim 1, **characterized in that** flexible navigation objects are used for representing the uncertainty.

8. The method as set forth in claim 1, **characterized in that** from a plurality of probability density distributions sequenced in nodes and branches an expression as to the reliability of the graph or a segment of the graph is obtained in thus being able to rate the certainty of the route represented by the graph.

9. The method as set forth in claim 8, **characterized in that** two or more graphs or segments of a graph differing in routing but leading to the same destination are compared to each other as regards their reliability expression and certainty rating and that on the basis of this graph or graph segment comparison the route can be selected having resulted in maximum reliability and certainty.

10. The method as set forth in any of the preceding claims, **characterized in that** temporal safety margins between two locations represented hitherto in the display means by two nodes in sequence are optimized on the basis of the uncertainty information indicated there.

11. Application of the method as set forth in any of the preceding claims in a system for planning and/or organizing the sequence of motion of an object or subject.

12. The application as set forth in claim 11,
**characterized in that** the system is a personal time organization system as may also relate to planning and implementing travel schedules.

Fig.1

Fig.2

Flughafen
FRA
09:40 Uhr

Flughafen
FRA
11:38 Uhr

Anschlußstelle
Kelsterbach
11.35 Uhr

Flug
LH127

Zufahrt
Flughafen FRA

Flughafen
MUC
08:35 Uhr

A3

A3

Würzburg
10:30 Uhr

Autobahnkreuz
Fürth-Erlangen
09:38 Uhr

A73

A9

A92

Autobahnkreuz
Nürnberg-Feucht
09:20 Uhr

Flughafen
MUC
08:00 Uhr

Autobahnkreuz
Neufahrn
08:10 Uhr

Fig.3

EP 1 215 468 B1

Fig.4

Flughafen
FRA
09:40 Uhr

7

Boarden des
Flugzeugs

Sitz im
Flugzeug
eingenommen
08:30 Uhr

Flug
LH127

Warten am
Gate

Aufruf
08:25 Uhr

Flughafen
MUC
08:35 Uhr

Warten in
Lounge

8

Gehen zum
Gate

Lounge am
Gate B13
08:09 Uhr

Gehen zur
Sicherheitskontrolle

Flughafen
MUC
08:00 Uhr

Gehen zum
und Warten
am Check-In

Sicherheitskontrolle
passiert
08:07 Uhr

6

Check-In
08.03 Uhr

9

Ankunft vor
Abflughalle
08:00 Uhr

Fig.5

EP 1 215 468 B1

Mchn = München Hbf
Hdlbg = Heidelberg Hbf
Stgt = Stuttgart Hbf
Mnhm = Mannheim Hbf
HH = Hamburg Hbf
Rostk = Rostock Hbf

W = Warten

Fig.6

EP 1 215 468 B1

(a)

(b)

Fig.7

Ankunft Zubringer

15

Abflug Anschluß

13

t

Wahrscheinlichkeit

14

Dauer des Fußmarsches

Mittlere
Dauer

t

Dauer in Sekunden

# Fig.8